# EUROPÄISCHE PATENTSCHRIFT

(11) **EP 4 574 937 B1**
(45) Veröffentlichungstag und Bekanntmachung des Hinweises auf die Patenterteilung: **15.07.2026**
(21) Anmeldenummer: 24221070.6
(22) Anmeldetag: 18.12.2024
(51) Int. Cl.: C10M 175/00, H01F 27/14, B01J 41/05, C10N 40/16

(54) **ARBEITSMASCHINE MIT EINER ENERGIEERZEUGUNGS- ODER ENERGIEUMWANDLUNGSANLAGE, DIE EINE MECHANISCHE, INSBESONDERE ELEKTROMECHANISCHE EINHEIT, AUFWEIST, INSBESONDERE ELEKTRISCHER TRANSFORMATOR, UND BEHANDLUNGVORRICHTUNG FÜR EINEN ÖLKREISLAUF**
WORKING MACHINE WITH AN ENERGY GENERATION OR ENERGY CONVERSION INSTALLATION COMPRISING A MECHANICAL, IN PARTICULAR ELECTROMECHANICAL UNIT, IN PARTICULAR AN ELECTRICAL TRANSFORMER, AND TREATMENT UNIT FOR AN OIL CIRCUIT
MACHINE DE TRAVAIL AVEC UNE INSTALLATION DE PRODUCTION D'ÉNERGIE OU DE CONVERSION D'ÉNERGIE COMPRENANT UNE UNITÉ MÉCANIQUE, NOTAMMENT UNE UNITÉ ÉLECTROMÉCANIQUE, EN PARTICULIER UN TRANSFORMATEUR ÉLECTRIQUE, ET UNITÉ DE TRAITEMENT POUR UN CIRCUIT D'HUILE

(30) Priorität: 22.12.2023 DE 102023136599
(43) Veröffentlichungstag der Anmeldung: 25.06.2025
(73) Patentinhaber: Perma-Trade Wassertechnik GMBH, 71229 Leonberg (DE)
(72) Erfinder: SAUTTER, Michael, 71229 Leonberg (DE); ENDE, Dietmar, 71287 Weissach (DE)
(74) Vertreter: Herrmann, Jochen

(56) Entgegenhaltungen:
- EP-A1- 3 659 980
- FR-A1- 2 780 898
- JP-U- S5 266 921

## Beschreibung

Die Erfindung betrifft eine Arbeitsmaschine mit einer Energieerzeugungs- oder Energieumwandlungsanlage, die eine mechanische, insbesondere elektromechanische Einheit, aufweist.

Eine solche Arbeitsmaschine kann im Rahmen der Erfindung insbesondere ein elektrischer Transformator sein. Ein Transformator ist ein Bauelement der Elektrotechnik. Er besteht meist aus zwei oder mehreren Spulen (Wicklungen), die in der Regel aus isoliertem Kupferdraht gewickelt sind und sich auf einem gemeinsamen Magnetkern befinden. Ein Transformator wandelt eine Eingangswechselspannung, die an einer der Spulen angelegt ist, in eine Ausgangswechselspannung um, die an der anderen Spule abgegriffen werden kann. Transformatoren dienen vielfach zur Spannungswandlung in Energieversorgungsanlagen. Weiterhin werden sie bei der Signalübertragung und der Schutztrennung benötigt. In Transformatoren wird häufig Transformatorenöl eingesetzt, das dann auch als Isolieröl bezeichnet wird. Es handelt sich hierbei um ein hoch raffiniertes Mineralöl oder ein dünnflüssiges Silikonöl, dass bei hohen Temperaturen stabil ist. Das Transformatorenöl dient zur Isolation oder zur Kühlung des Transformators. Isolieröl wird auch in anderen Arbeitsmaschinen, beispielsweise in der Hochspannungstechnik, Kondensatoren und Schaltern, eingesetzt, wobei es häufig auch zum Zwecke der Funkenlöschung verwendet wird. Aufgrund von Alterung muss das Öl einer regelmäßigen Prüfung unterzogen und bedarfsweise gewechselt werden, um die Funktionalität zu gewährleisten. Hierdurch entsteht ein hoher Wartungsaufwand und es sind Stillstandszeiten zu berücksichtigen, in denen die Arbeitsmaschine nicht verwendet werden kann.

Im Stand der Technik offenbart die Patentanmeldung EP 3 659 980 A eine Vorrichtung zur Reduzierung des Sauerstoffgehaltes des Heizungswassers einer Heizungsanlage, bei der in einem Hauptstrom oder einem Nebenstrom eines Heizungswasserkreislaufs der Heizungsanlage und/oder in einer Frischwasserzuleitung eine von dem Heizungswasser oder Frischwasser durchströmte Kationen- oder Anionenaustauscherpatrone angeordnet ist. Im Falle der Anionenaustauscherpatrone weist selbige einen Anionenaustauscher auf, der mit einem Reduktionsmittel für Sauerstoff beladen ist.

Das Gebrauchsmuster JP S52 66921 U offenbart einen Transformator mit Ölkreislauf und einer Behandlungseinrichtung enthaltend einen Kationen- oder Anionenaustauscher.

Die Patentanmeldung FR 2 780 898 A offenbart die Behandlung eines Transformatorenöls mit einem vorher getrockneten Kationen- oder Anionenaustauscherharz.

Es ist Aufgabe der Erfindung, eine Arbeitsmaschine der eingangs erwähnten Art bereitzustellen, mit der sich ein wartungsarmer Betrieb verwirklichen lässt.

Diese Aufgabe der Erfindung wird mit den Merkmalen des Anspruchs 1 gelöst. Demgemäß wird eine Arbeitsmaschine mit einer Energieerzeugungs- oder Energieumwandlungsanlage vorgeschlagen, die eine mechanische, insbesondere elektromechanische Einheit, aufweist, wobei der mechanischen Einheit ein Ölkreislauf zugeordnet ist, wobei zumindest eine Teilmenge des Ölkreislaufs durch eine Behandlungsvorrichtung leitbar ist, wobei die Behandlungsvorrichtung einen Behandlungsbereich aufweist, in dem ein Anionenaustauscher gehalten ist und wobei der Anionenaustauscher komplex gebunden ein Reduktionsmittel zur Entfernung zumindest eines Teils des Sauerstoffs aus dem durch den Behandlungsbereich geführten Öl aufweist.

Das verwendete Öl in einer erfindungsgemäßen Arbeitsmaschine nimmt unter normalen Prozessbedingungen eine große Menge an Gas, insbesondere Sauerstoff aus der Luft auf. Der Sauerstoff führt zu einer Oxidation des Öls, was zu einer Verschlechterung der Eigenschaften, beispielsweise der dielektrischen Eigenschaften, führt. Bei einem Transformatorsystem ist die Folge eine Abnahme der elektrischen Festigkeit. Zudem fördert die Oxidation der verwendeten Öle auch deren Schaumbildung. Um diesen negativen Vorgängen entgegenzuwirken, wird gemäß der Erfindung eine Behandlungsvorrichtung vorgeschlagen, in deren Behandlungsbereich ein Anionenaustauscher gehalten ist, vorzugsweise ein Anionenaustauscher-Harz in Granulatform. Der Anionenaustauscher ist gemäß der Erfindung mit einem komplex gebundenen Reduktionsmittel versehen. Bei einer Durchleitung des Öls durch die Behandlungseinrichtung wird dieses in dem Behandlungsbereich an dem Anionenaustauscher vorbeigeleitet. Das Reduktionsmittel ist eine Sauerstoff zehrende Chemikalie. Wird das Öl mit dem Reduktionsmittel in Kontakt gebracht so wird ein Teil des in dem Öl gelösten Sauerstoffs durch Reaktion mit dem Reduktionsmittel entfernt. Hierdurch kann der im Öl vorhandene Sauerstoff zumindest teilweise entfernt werden. Somit lassen sich die Gebrauchseigenschaften des Öls verbessern oder wiederherstellen, ohne dass das Öl komplett ausgetauscht werden muss. Hierdurch können Stillstandszeiten verringert bzw. die Funktionalität der Arbeitsmaschine verbessert werden. Vorteilhafterweise verbleibt die oxidierte Form des Reduktionsmittels auf dem Ionentauscher und gelangt somit nicht in das Öl.

Im Rahmen der Erfindung kann es so sein, dass der Ölkreislauf einen Zirkulationsbetrieb vorsieht, wobei das zu behandelnde Öl zumindest teilweise wiederholt durch den Behandlungsbereich geleitet wird, um eine kontinuierliche Sauerstoffzehrung zu erreichen.

Dabei kann es vorgesehen sein, dass die gesamte Füllmenge im Ölkreislauf durch den Behandlungsbereich hindurch geleitet wird. Denkbar ist es jedoch auch, dass ein Bypass des Kreislaufes vorgesehen ist. Dann wird nur eine Teilmenge des Öls im Bypass durch den Behandlungsbereich geleitet. Hierdurch kann insbesondere eine kontinuierliche Deoxidierung des Öls vorgenommen werden, wobei anteilig mit dem Reduktionsmittel Sauerstoff aus dem Öl entfernt wird. Durch den Zirkulationsbetrieb wird das Öl wiederholt durch den an Ionentauscher geleitet. Dadurch wird der Sauerstoff auch bei vergleichsweise langsamen Reaktionsgeschwindigkeiten zwischen dem Reduktionsmittel und dem Sauerstoff vollständig oder nahezu vollständig aus dem Öl beseitigt.

Vorzugsweise ist es so, dass der Behandlungsraum in Strömungsrichtung nach der mechanischen Einheit angeordnet ist. Dies ist insbesondere dann von Vorteil, wenn mittels der mechanischen Einheit Wärme in das Öl eingetragen wird. Hierbei macht man sich die Erkenntnis zu Nutze, dass die Reaktionsgeschwindigkeit des Reduktionsmittels im warmen Öl höher ist als im kalten Öl. Zudem ist die Viskosität geringer, was die Durchleitung des Öls durch den Behandlungsraum erleichtert.

Ist allerdings die Temperatur des Öls nach der mechanischen Einheit so hoch, dass eine Schädigung des Anionenaustauschers zu befürchten ist, so wird der Behandlungsbereich vorzugsweise in Strömungsrichtung nach einem Wärmetauscher angeordnet, der dazu dient das Öl zu kühlen.

Gemäß einer bevorzugten Erfindungsvariante kann es vorgesehen sein, dass das Reduktionsmittel zumindest teilweise, vorzugsweise zum überwiegenden Teil, insbesondere vollständig, von Sulfitionen gebildet ist. Sulfitionen wirken sauerstoffzehrend. Bei Kontakt mit dem Öl reagieren sie mit dem im Öl gelösten Sauerstoff, wobei der Sauerstoff reduziert und das Sulfition zum Sulfation oxidiert wird. Vorteilhaft weist das Sulfation keine geringere Affinität zu dem Anionenaustauscher auf als die reduzierte Form des Sulfits, sodass es auf dem Anionenaustauscher verbleibt. Vorzugsweise kann es vorgesehen sein, dass bei dem Anionenaustauscher anteilig Hydroxidionen OH⁻ gegen Ionen des Reduktionsmittels, vorzugsweise gegen Sulfitionen ersetzt sind. Dies kann beispielsweise einer Versauerung des Öls entgegenwirken.

Wenn vorgesehen ist, dass in Strömungsrichtung nach dem Behandlungsbereich ein Filter, insbesondere ein Tiefenfilter, in den Ölkreislauf integriert ist, dann können eventuell aus dem Anionenaustauscher austretende Stoffe ausgefiltert werden.

Wie dies oben erwähnt wurde, kann der Behandlungsbereich in einem Bypass zu einem Hauptstrombereich angeordnet sein. Entsprechend bildet der Bypass einen Nebenstrombereich, in dem der Behandlungsbereich untergebracht ist. Somit ist der Nebenstrombereich von einem Hauptstrombereich abgezweigt und verläuft parallel zu diesem. Vorteilhafterweise kann es dabei so sein, dass das Öl durch den Nebenstrombereich mittels einer im Nebenstrombereich angeordneten Nebenstrompumpe gefördert wird, um die Behandlung des Öls sicherzustellen.

Es hat sich gezeigt, dass eine gute Entfernung des Sauerstoffs aus dem Öl dann möglich ist, wenn vorgesehen ist, dass der Volumenstrom durch den Behandlungsbereich im Bereich zwischen 10 und 30 Bettvolumen (BV/h) beträgt, wobei das Bettvolumen das Volumen ist, welches der Anionenaustauscher im Behandlungsbereich einnimmt.

Die Aufgabe der Erfindung wird auch gelöst mit einer Behandlungsvorrichtung zum zumindest teilweisen Entfernen von Sauerstoff aus einem Öl für eine mechanische, insbesondere elektromechanische Einheit, wobei eine Behandlungsvorrichtung vorgesehen ist, wobei die Behandlungsvorrichtung einen Behandlungsbereich aufweist, in dem ein Anionenaustauscher gehalten ist, wobei der Anionenaustauscher komplex gebunden ein Reduktionsmittel zur Entfernung zumindest eines Teils des Sauerstoffs aus dem durch den Behandlungsbereich geführten Öl aufweist, und wobei der Restwassergehalt des in dem Behandlungsbereich gehaltenen Anionenaustauschers ≤ 3% beträgt.

Auf die oben beschriebenen Vorteile wird Bezug genommen.

Die Behandlungsvorrichtung kann, wie beschrieben, im Ölkreislauf einer Arbeitsmaschine verwendet werden. Zudem ist es auch möglich, die Behandlungseinrichtung zur Befüllung einer Arbeitsmaschine mit Öl zu verwenden, wobei das Öl dann über die Behandlungseinrichtung geführt wird. Weiterhin ist es denkbar, dass die Behandlungseinrichtung auch an einem Nachspeise-Anschluss eines Ölkreislaufes zur Verwendung kommt, wobei das über den Nachspeise-Anschluss zugeführte Öl dann mittels der Behandlungsvorrichtung behandelt wird, um darin befindlichen Sauerstoff zumindest teilweise zu entfernen.

Besonders bevorzugt kann es vorgesehen sein, dass der Restwassergehalt des in dem Behandlungsbereich gehaltenen Anionenaustauschers ≤1 %, besonders bevorzugt ≤0,5%, beträgt. Auf diese Weise wird wirksam verhindert, dass Wasser die Funktionalität des Anionenaustauschers beeinträchtigt.

Dies stellt besondere Anforderungen an die Produktion des Anionenaustauschers. Da der Beladungsprozess des Anionenaustauschers im wässrigen Milieu stattfindet. Im Rahmen der Erfindung kann es nun vorgesehen sein, dass nach dem Konvertieren des Anionenaustauschers im wässrigen Milieu ein weiterer Verfahrensschritt in die Fertigung integriert wird, wobei der Anionenaustauscher mit einer organischen Flüssigkeit gespült wird, welche vorzugsweise mit Wasser mischbar ist und weiter bevorzugt leicht verdunstet. Beispielsweise können Alkohol, insbesondere bevorzugt Isopropanol oder Ethanol, Verwendung finden. Denkbar ist es auch, dass eine Mischung verschiedener Alkohole zum Einsatz kommt. Wenn der Anionenaustauscher mit der organischen Flüssigkeit gespült wird, dann nimmt diese das Wasser aus dem Anionenaustauscher auf. Dieser Schritt kann vorzugsweise überwacht werden, bis sich der gewünschte maximale Restwassergehalt einstellt. Anschließend kann es vorgesehen sein, dass der Anionenaustauscher im Behandlungsraum mittels eines Inertgasstroms, beispielsweise mittels Stickstoff oder Argon, getrocknet wird, um die leichtflüchtige organische Flüssigkeit auszutreiben. Überraschenderweise zeigt sich, dass nach diesem Trocknungsprozess das anorganische Reduktionsmittel, mit welchem das Harz konvertiert wurde, erfindungsgemäß für die Sauerstoffentfernung in Ölen gut eingesetzt werden kann.

Die Erfindung wird im Folgenden anhand eines in der Zeichnung dargestellten Ausführungsbeispiels näher erläutert. Die Zeichnung zeigt in schematischer Darstellung eine Arbeitsmaschine 10. Die Arbeitsmaschine 10 weist eine Energieerzeugungs- bzw. -Umwandlungsanlage 14, vorliegend einen elektrischen Transformator, auf. Mittels des Transformators kann elektrische Energie erzeugt bzw. umgewandelt werden. Dem Transformator ist ein Ölkreislauf 11 zugeordnet, durch den Öl geleitet wird. Es handelt sich hierbei um das Isolieröl des Transformators.

Bedarfsweise kann es vorgesehen sein, dass dem Ölkreislauf 11 eine Nachspeiseleitung 12 zugeordnet ist. Über diese Nachspeiseleitung 12 kann fehlendes Öl in den Ölkreislauf 11 eingefüllt werden.

Wie die Zeichnung veranschaulicht, kann es auch so sein, dass in den Ölkreislauf 11 wenigstens ein Wärmetauscher 17 integriert ist. Über den Wärmetauscher kann die mit dem Öl von dem Transformator abgeführte Wärme in die Umgebung abgetauscht werden.

Um das Öl im Ölkreislauf 11 zu fördern, ist eine Pumpe 15 verwendet. Die Pumpe 15 kann entweder in den von dem Transformator kommenden Vorlauf 16 oder in den zu dem Transformator führenden Rücklauf 13 integriert werden.

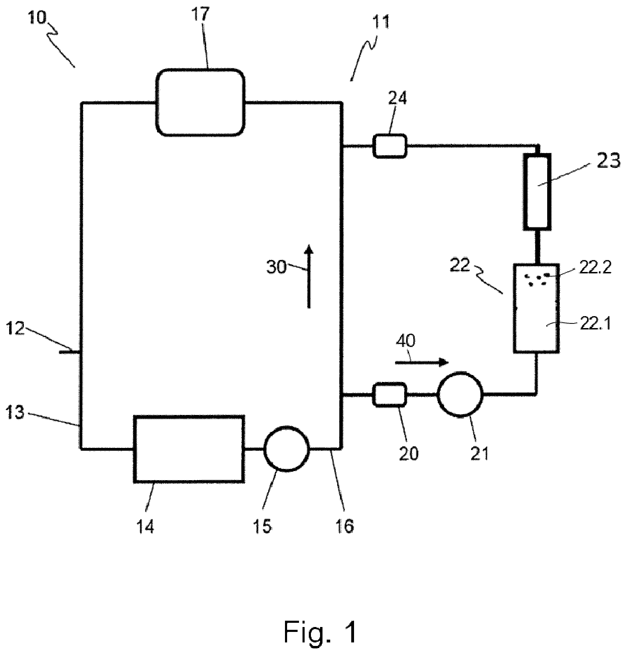

Wie die Darstellung veranschaulicht, bildet der Kühlkreislauf einen Hauptstrombereich 30, durch den das Öl zirkuliert wird. Von dem Hauptstrombereich 30 zweigt ein Nebenstrombereich 40 ab, wobei der Nebenstrombereich 40 parallel zu dem Hauptstrombereich 30 verläuft. Es kann so sein, dass der Nebenstrombereich 40 in den Bereich des Rücklaufs 16 integriert ist, wie Figur 1 zeigt. Denkbar ist jedoch auch, dass der Nebenstrombereich 40 in den Vorlauf 13 integriert ist.

Wie die Darstellung zeigt, sind dem Nebenstrombereich 40 zwei Absperrventil 20, 24 zugeordnet. Mittels diesen kann der Nebenstrombereich 40 von dem Hauptstrombereich 30 abgetrennt werden.

Die Darstellung zeigt weiterhin, dass in den Nebenstrombereich 40 eine Behandlungsvorrichtung 22 integriert ist. Vorzugsweise ist die Behandlungsvorrichtung 22 im Bereich zwischen den beiden Absperrventilen 20, 24 angeordnet. Wenn die Absperrventile 20, 24 geschlossen sind, so kann die Behandlungsvorrichtung 22 zu Wartungszwecken aus dem Nebenstrombereich 40 ausgebaut werden, ohne dass dabei der Hauptstrombereich 30 beeinträchtigt wird.

Zur Förderung des Öls durch den Nebenstrombereich 40 ist eine Nebenstrompumpe 21 vorgesehen, die in dem Nebenstrombereich 40 arbeitet.

Die Behandlungsvorrichtung 22 weist einen Behandlungsbereich 22.1 auf, der von dem im Nebenstrombereich 40 geführten Öl durchströmt werden kann. In diesem Behandlungsbereich 22.1 ist ein Anionenaustauscher 22.2, insbesondere ein Anionenaustauscher-Harz, gehalten.

Der Anionenaustauscher 22.2 weist, komplex gebunden, ein Reduktionsmittel zur Entfernung zumindest eines Teils des Sauerstoffs aus dem durch den Behandlungsbereich 22.1 geführten Öl auf.

Bei dem Reduktionsmittel kann es sich um Sulfitionen handeln, die komplex gebunden auf dem Harz des Anionenaustauschers gehalten sind. Bei der Durchleitung von Öl durch den Behandlungsbereich 22.1 reagiert das Sulfition mit dem Sauerstoff des Öls unter Bildung von Sulfat.

Um zu verhindern, dass aus dem Behandlungsbereich 22.1 Stoffe, insbesondere Harzpartikel, ausgeschwemmt werden, kann es vorgesehen sein, dass in Strömungsrichtung nach der Behandlungsvorrichtung 22 ein Filter 23, insbesondere ein Tiefenfilter, angeordnet ist.

## Patentansprüche

1. Arbeitsmaschine (10) mit einer Energieerzeugungs- oder Energieumwandlungsanlage (14), die eine mechanische, insbesondere elektromechanische Einheit, aufweist, wobei der mechanischen Einheit ein Ölkreislauf (11) zugeordnet ist, wobei zumindest eine Teilmenge des im Ölkreislaufs (11) geführten Öls durch eine Behandlungsvorrichtung (22) leitbar ist, wobei die Behandlungsvorrichtung (22) einen Behandlungsbereich (22.1) aufweist, in dem ein Anionenaustauscher (22.2) gehalten ist und wobei der Anionenaustauscher (22.2) komplex gebunden ein Reduktionsmittel zur Entfernung zumindest eines Teils des Sauerstoffs aus dem durch den Behandlungsbereich (22.1) geführten Öl aufweist.

2. Arbeitsmaschine nach Anspruch 1, **dadurch gekennzeichnet, dass** das Reduktionsmittel zumindest teilweise, vorzugsweise zum überwiegenden Teil, insbesondere vollständig, von Sulfitionen gebildet ist.

3. Arbeitsmaschine nach Anspruch 1 oder 2, **dadurch gekennzeichnet, dass** bei dem Anionenaustauscher (22.2) zumindest anteilig OH⁻-Ionen gegen Ionen des Reduktionsmittels, vorzugsweise gegen Sulfitionen, ersetzt sind.

4. Arbeitsmaschine nach einem der Ansprüche 1 bis 3, **dadurch gekennzeichnet, dass** der Behandlungsbereich (22.1) in Strömungsrichtung nach der mechanischen Einheit im Rücklauf des Ölkreislaufs (11) angeordnet ist.

5. Arbeitsmaschine nach einem der Ansprüche 1 bis 4, **dadurch gekennzeichnet, dass** in Strömungsrichtung nach dem Behandlungsbereich (22.1) ein Filter, (23) insbesondere ein Tiefenfilter, in den Ölkreislauf integriert ist.

6. Arbeitsmaschine nach einem der Ansprüche 1 bis 5, **dadurch gekennzeichnet, dass** der Behandlungsbereich (22.1) einen Nebenstrombereich (40) aufweist, der von einem Hauptstrombereich (30) abgezweigt ist und parallel zu diesem verläuft, wobei der Behandlungsbereich (22.1) im Nebenstrombereich (40) angeordnet ist und wobei vorzugsweise eine Nebenstrompumpe (21) das Öl durch den Nebenstrombereich (40) fördert.

7. Arbeitsmaschine nach einem der Ansprüche 1 bis 6, **dadurch gekennzeichnet, dass** im Ölkreislauf (11) ein Wärmetauscher (17), vorzugsweise in Strömungsrichtung nach der mechanischen Einheit angeordnet ist.

8. Arbeitsmaschine nach einem der Ansprüche 1 bis 7, **dadurch gekennzeichnet, dass** die mechanische Einheit (14) ein elektrischer Transformator ist.

9. Arbeitsmaschine nach einem der Ansprüche 1 bis 8, **dadurch gekennzeichnet, dass** der Behandlungsbereich (22.1) angeordnet und ausgebildet ist, um einen Volumenstrom im Bereich zwischen 10 und 30 Bettvolumen (BV/h) zu leiten, wobei das Bettvolumen das Volumen ist welches der Anionenaustauscher (22.2) im Behandlungsbereich (22.1) einnimmt.

10. Behandlungsvorrichtung zum zumindest teilweisen Entfernen von Sauerstoff aus einem Öl für eine mechanische, insbesondere elektromechanische Einheit (14), wobei eine Behandlungsvorrichtung (22) vorgesehen ist, wobei die Behandlungsvorrichtung (22) einen Behandlungsbereich (22.1) aufweist, in dem ein Anionenaustauscher (22.2) gehalten ist, wobei der Anionenaustauscher (22.2) komplex gebunden ein Reduktionsmittel zur Entfernung zumindest eines Teils des Sauerstoffs aus dem durch den Behandlungsbereich (22.1) geführten Öl aufweist, und wobei der Restwassergehalt des in dem Behandlungsbereich (22.1) gehaltenen Anionenaustauschers (22.2) ≤3% beträgt.

11. Behandlungsvorrichtung nach Anspruch 10, **dadurch gekennzeichnet, dass** das Reduktionsmittel zumindest teilweise, vorzugsweise zum überwiegenden Teil, insbesondere vollständig, von Sulfitionen gebildet ist, wobei vorzugsweise vorgesehen ist, dass bei dem Anionenaustauscher (22.2) zumindest anteilig OH⁻-Ionen gegen Ionen des Reduktionsmittels, vorzugsweise gegen Sulfitionen ersetzt sind.

12. Behandlungsvorrichtung nach Anspruch 10 oder 11, **dadurch gekennzeichnet, dass** der Restwassergehalt des in dem Behandlungsbereich (22.1) gehaltenen Anionenaustauschers (22.2) ≤1% beträgt.

13. Behandlungsvorrichtung nach einem der Ansprüche 10 bis 12, **dadurch gekennzeichnet, dass** der Anionenaustauscher (22.2) ein stark basisches Anionentauscherharz ist.

14. Arbeitsmaschine nach einem der Ansprüche 1-9 mit einer Behandlungsvorrichtung nach einem der Ansprüche 10-13.

## Claims

1. A working machine (10) comprising an energy generation or energy conversion system (14) comprising a mechanical, in particular electromechanical, unit, wherein an oil circuit (11) is associated with the mechanical unit, wherein at least a portion of the oil circulating in the oil circuit (11) can be passed through a treatment device (22), wherein the treatment device (22) comprises a treatment region (22.1) in which an anion exchanger (22.2) is held, and wherein the anion exchanger (22.2) contains a reducing agent in complex-bound form for removing at least a portion of the oxygen from the oil passed through the treatment region (22.1).

2. Working machine according to claim 1, **characterized in that** the reducing agent is formed at least partially, preferably predominantly, and in particular completely, by sulfite ions.

3. Working machine according to claim 1 or 2, **characterized in that**, in the anion exchanger (22.2), at least a portion of the OH⁻ ions are replaced by ions of the reducing agent, preferably by sulfite ions.

4. Working machine according to any one of claims 1 to 3, **characterized in that** the treatment region (22.1) is arranged in the flow direction downstream of the mechanical unit in the return line of the oil circuit (11).

5. Working machine according to any one of claims 1 to 4, **characterized in that**, in the direction of flow downstream of the treatment region (22.1), a filter (23), in particular a depth filter, is integrated into the oil circuit.

6. Working machine according to any one of claims 1 to 5, **characterized in that** the treatment region (22.1) comprises a bypass section (40) that is branched off from a main flow section (30) and runs parallel thereto, wherein the treatment region (22.1) is arranged in the bypass section (40) and wherein, preferably, a bypass pump (21) conveys the oil through the bypass section (40).

7. Working machine according to any one of claims 1 to 6, **characterized in that** a heat exchanger (17) is arranged in the oil circuit (11), preferably downstream of the mechanical unit in the direction of flow.

8. Working machine according to any one of claims 1 to 7, **characterized in that** the mechanical unit (14) is an electrical transformer.

9. Working machine according to any one of claims 1 to 8, **characterized in that** the treatment region (22.1) is arranged and configured to conduct a flow rate in the range between 10 and 30 bed volumes (BV/h), wherein the bed volume is the volume occupied by the anion exchanger (22.2) in the treatment region (22.1).

10. Treatment device for at least partially removing oxygen from an oil for a mechanical, in particular electromechanical, unit (14), wherein a treatment device (22) is provided, wherein the treatment device (22) comprises a treatment region (22.1) in which an anion exchanger (22.2) is held, wherein the anion exchanger (22.2) contains a reducing agent in a complex-bound form for removing at least a portion of the oxygen from the oil passed through the treatment region (22.1), and wherein the residual water content of the anion exchanger (22.2) held in the treatment region (22.1) is ≤3%.

11. Treatment device according to claim 10, **characterized in that** the reducing agent is formed at least partially, preferably predominantly, and in particular completely, of sulfite ions, wherein it is preferably provided that, in the anion exchanger (22.2), at least a portion of the OH⁻ ions are replaced by ions of the reducing agent, preferably by sulfite ions.

12. Treatment device according to claim 10 or 11, **characterized in that** the residual water content of the anion exchanger (22.2) held in the treatment region (22.1) is ≤1%.

13. Treatment device according to any one of claims 10 to 12, **characterized in that** the anion exchanger (22.2) is a strongly basic anion exchange resin.

14. Working machine according to any one of claims 1-9, comprising a treatment device according to any one of claims 10-13.

## Revendications

1. Machine de travail (10) comprenant une installation de production ou de conversion d'énergie (14) qui comprend une unité mécanique, en particulier électromécanique, un circuit d'huile (11) étant associé à l'unité mécanique, au moins une partie de l'huile circulant dans le circuit d'huile (11) pouvant être acheminée à travers un dispositif de traitement (22), le dispositif de traitement (22) comportant une zone de traitement (22.1) dans laquelle est maintenu un échangeur d'anions (22.2) et dans laquelle l'échangeur d'anions (22.2) contient, sous forme de complexe, un agent réducteur destiné à éliminer au moins une partie de l'oxygène de l'huile acheminée à travers la zone de traitement (22.1).

2. Machine de travail selon la revendication 1, **caractérisée en ce que** l'agent réducteur est constitué, au moins en partie, de préférence en grande partie, et en particulier entièrement, d'ions sulfate.

3. Machine de travail selon la revendication 1 ou 2, **caractérisée en ce que**, dans l'échangeur d'anions (22.2), les ions OH⁻ sont remplacés, au moins en partie, par des ions de l'agent réducteur, de préférence par des ions sulfite.

4. Machine de travail selon l'une des revendications 1 à 3, **caractérisée en ce que** la zone de traitement (22.1) est disposée, dans le sens d'écoulement, en aval de l'unité mécanique dans le retour du circuit d'huile (11).

5. Machine de travail selon l'une des revendications 1 à 4, **caractérisée en ce qu'**un filtre (23), en particulier un filtre en profondeur, est intégré dans le circuit d'huile en aval de la zone de traitement (22.1) dans le sens d'écoulement.

6. Machine de travail selon l'une des revendications 1 à 5, **caractérisée en ce que** la zone de traitement (22.1) comporte une zone de dérivation (40) qui est dérivée d'une zone de flux principal (30) et s'étend parallèlement à celle-ci, la zone de traitement (22.1) est disposée dans la zone de dérivation (40) et dans laquelle, de préférence, une pompe de dérivation (21) refoule l'huile à travers la zone de dérivation (40).

7. Machine de travail selon l'une des revendications 1 à 6, **caractérisée en ce qu'**un échangeur de chaleur (17) est disposé dans le circuit d'huile (11), de préférence en aval de l'unité mécanique dans le sens d'écoulement.

8. Machine de travail selon l'une des revendications 1 à 7, **caractérisée en ce que** l'unité mécanique (14) est un transformateur électrique.

9. Machine de travail selon l'une des revendications 1 à 8, **caractérisée en ce que** la zone de traitement (22.1) est agencée et conçue pour acheminer un débit volumique compris entre 10 et 30 volumes de lit (BV/h), le volume de lit étant le volume occupé par l'échangeur d'anions (22.2) dans la zone de traitement (22.1).

10. Dispositif de traitement destiné à éliminer au moins partiellement l'oxygène d'une huile pour une unité mécanique, en particulier électromécanique (14), dans lequel il est prévu un dispositif de traitement (22), le dispositif de traitement (22) comportant une zone de traitement (22.1) dans laquelle est maintenu un échangeur d'anions (22.2) est maintenu, l'échangeur d'anions (22.2) contenant, sous forme de complexe, un agent réducteur destiné à éliminer au moins une partie de l'oxygène de l'huile acheminée à travers la zone de traitement (22.1), et la teneur en eau résiduelle de l'échangeur d'anions (22.2) maintenu dans la zone de traitement (22.1) est ≤ 3 %.

11. Dispositif de traitement selon la revendication 10, **caractérisé en ce que** l'agent réducteur est constitué au moins en partie, de préférence en grande partie, en particulier entièrement, d'ions sulfate, étant prévu de préférence que, dans l'échangeur d'anions (22.2), au moins une partie des ions OH⁻ soit remplacée par des ions de l'agent réducteur, de préférence par des ions sulfate.

12. Dispositif de traitement selon la revendication 10 ou 11, **caractérisé en ce que** la teneur en eau résiduelle de l'échangeur d'anions (22.2) retenu dans la zone de traitement (22.1) est ≤ 1 %.

13. Dispositif de traitement selon l'une des revendications 10 à 12, **caractérisé en ce que** l'échangeur d'anions (22.2) est une résine échangeuse d'anions fortement basique.

14. Machine de travail selon l'une des revendications 1 à 9, comprenant un dispositif de traitement selon l'une des revendications 10 à 13.
